# FASCICULE DE BREVET EUROPEEN

(11) **EP 3 220 515 B1**
(45) Date de publication et mention de la délivrance du brevet: **25.11.2020**
(21) Numéro de dépôt: 17161871.3
(22) Date de dépôt: 20.03.2017
(51) Int. Cl.: H02K 5/15, H02K 5/173, H02K 15/00

(54) **MOTEUR ÉLECTRIQUE DÉMONTABLE**
ZERLEGBARER ELEKTROMOTOR
DEMOUNTABLE ELECTRIC MOTOR

(30) Priorité: 18.03.2016 FR 1652346
(43) Date de publication de la demande: 20.09.2017
(73) Titulaire: ALSTOM Transport Technologies, 93400 Saint-Ouen (FR)
(72) Inventeur: ROBBE, Gilles, 25660 Montfaucon (FR)
(74) Mandataire: Lavoix

(56) Documents cités:
- EP-A1- 1 460 747
- FR-A1- 3 024 611
- US-A1- 2012 062 076
- US-A1- 2015 123 517

## Description

La présente invention concerne un moteur électrique selon le préambule de la revendication 1.

Les moteurs électriques de ce type sont utilisés en particulier pour la propulsion de véhicules ferroviaires. Ils sont situés au niveau des bogies et reçoivent une puissance électrique fournie par une génératrice de courant ou bien directement fournie par une ligne à haute tension. Ils convertissent cette puissance électrique en puissance mécanique destinée à entrainer les roues en rotation, par le biais de la rotation d'un rotor entrainant un arbre porté par des roulements et entrainant lui-même la rotation d'une ou plusieurs roues, par exemple par l'intermédiaire d'un réducteur.

Les paliers à roulement des moteurs électriques nécessitent un entretien régulier, tel qu'un renouvellement de la graisse lubrifiante ou un changement de pièces de roulement usées, afin d'éviter une baisse de performance, par exemple du fait d'un grippage des roulements, ou un endommagement du moteur.

Avec un tel moteur électrique, le démontage des dispositifs de roulement pour leur entretien ou leur remplacement nécessite généralement le démontage du rotor avec son arbre afin de permettre l'extraction du roulement. Par conséquent, le temps d'entretien ou de remplacement des roulements est important et nécessite l'intervention de personnel qualifié et de moyens de manutention spécifiques. La présence d'aimants permanents sur le rotor rend l'opération encore plus complexe, et est une source de risque d'accident pour les opérateurs ou d'endommagement du moteur au cours de la manipulation.

Des moteurs électriques démontables sont décrits dans les documents FR 3024611 A1, US2015/123517 A1, US 2012/062076 A1 et EP 1460747 A1.

Un but de l'invention est ainsi de fournir un dispositif de roulements équipant un moteur électrique et permettant le démontage des roulements sans nécessiter le démontage du reste de la partie tournante du moteur.

Ainsi, l'invention a pour objet un moteur électrique selon la revendication 1.

Un moteur de ce type permet d'extraire le roulement en le faisant coulisser le long de l'arbre, sans avoir besoin de démonter le rotor avec son arbre.

Selon des modes de réalisation particuliers, le moteur selon l'invention présente l'une ou plusieurs des caractéristiques des revendications dépendantes, prises isolément ou selon toute configuration techniquement possible.

L'invention sera mieux comprise à la lecture de la description qui va suivre, faite en référence aux dessins annexés, parmi lesquels :
- la figure 1 est une représentation schématique en coupe longitudinale d'un moteur électrique ;
- la figure 2 est une vue en coupe longitudinale détaillée d'un flasque d'extrémité et d'un dispositif de roulement du moteur de la figure 1 ;
- la figure 3 est une vue en coupe transversale du dispositif de roulement de la figure 2 ;
- la figure 4 est une vue en coupe transversale du dispositif de roulement de la figure 3 en position de démontage ; et
- la figure 5 est une vue en coupe longitudinale détaillée d'un flasque d'extrémité et d'un dispositif de roulement d'une variante du moteur selon l'invention.

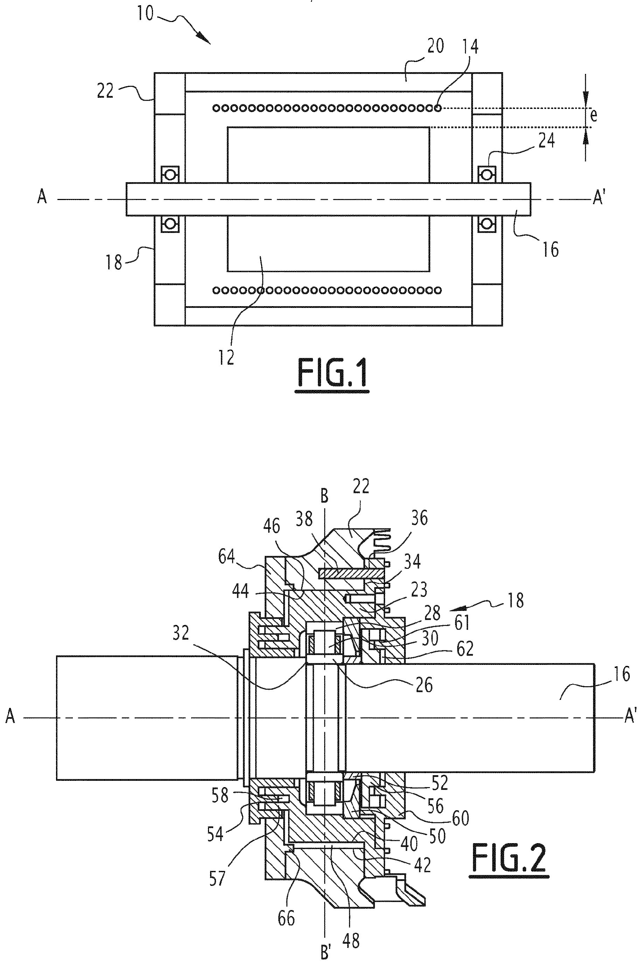

Un moteur 10 représenté sur la figure 1 transforme une puissance électrique en puissance mécaniques par la rotation d'un rotor 12 entrainé par un stator 14 alimenté électriquement. Le rotor 12 et le stator 14 sont séparés par un entrefer dont la largeur est notée e. Le rotor 12 est porté par un arbre 16, lui-même porté par au moins un dispositif de roulement 18. Un carter 20, sur lequel est assemblé au moins un flasque d'extrémité 22, protège le rotor 12 et le stator 14. Pour des raisons de simplicité, le moteur 10 représenté sur la figure 1 est schématique et tous les éléments le constituant n'ont pas été représentés. Ainsi, de façon classique, le moteur 10 comprend également entre autre un circuit de refroidissement et des moyens d'alimentation électrique reliés au stator 14.

Comme représenté figures 1 et 2, chaque flasque d'extrémité 22 est fermé par le dispositif de roulement 18 qui comprend un boitier 23, contenant un palier à roulement 24.

L'arbre 16 portant le rotor 12 est sensiblement cylindrique, s'étendant le long d'un axe longitudinal A-A', et libre en rotation par rapport au carter 20, autour de l'axe A-A' grâce à l'action du ou des paliers à roulement 24.

Le palier à roulement 24 comprend une bague interne 26 et une bague externe 28 enserrant une pluralité d'éléments roulants 30.

Comme représenté figure 2 à 4, la bague interne 26 est enserrée autour de l'arbre 16, en appui sur un épaulement 32 de l'arbre 16 qui bloque son déplacement axial. La bague externe 28 est contenue dans le boitier 23, et positionnée en regard de la bague interne 26. Les éléments roulants 30 sont des billes métalliques, libres de rouler dans le rail formé par la bague interne 26 et la bague externe 28 avec des frottements réduits par l'ajout d'un lubrifiant. Ainsi la bague interne est mobile en rotation autour de l'axe A-A' par rapport à la bague externe. En variante, les éléments roulants 30 sont des cylindres métalliques dont les axes sont parallèles à l'axe A-A' de l'arbre 16.

Le boitier 23 est maintenu fixé au flasque 22, en appui sur un épaulement 34 du boitier 23, par exemple au moyen de vis passant à travers des orifices 36 percés dans l'épaulement 34, et engagées dans des filetages 38 du flasque d'extrémité 22.

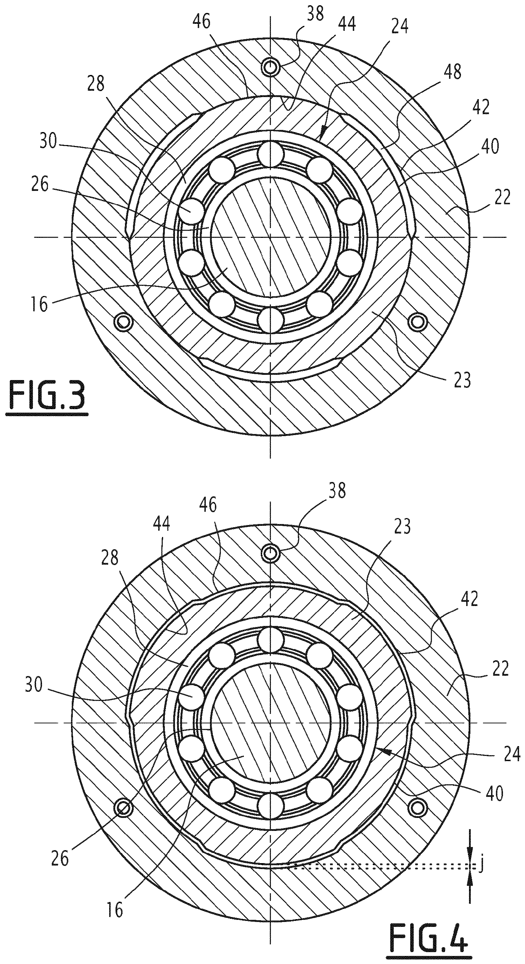

Comme représenté figures 3 et 4, le boitier 23 présente au moins une cavité 40, sur une partie d'une surface de contact circonférentielle avec le flasque 22, par exemple des secteurs en retrait. Par secteur en retrait, on entend que la distance entre la paroi de la cavité 40 et l'axe A-A' est plus faible que la distance entre l'axe A-A' et la paroi circonférentielle du reste du boitier 23.

De même le flasque 22 présente au moins une cavité 42, par exemple des secteurs en retrait, sur une partie de la surface de contact circonférentielle avec le boitier 23. Par secteur en retrait, on entend cette fois-ci que la distance entre la paroi de la cavité 42 et l'axe A-A' est plus importante que la distance entre l'axe A-A' et la paroi circonférentielle du reste du flasque 22.

Le boitier 23 présente en outre au moins une portée de centrage 44 sur le reste de la surface de contact circonférentielle avec le flasque 22, et le flasque 22 présente de même au moins une portée de centrage 46 sur le reste de la surface de contact circonférentielle avec le boitier 23. La distance entre l'axe A-A' et la portée de centrage 44 du boitier 23 est sensiblement égale à la distance entre l'axe A-A' et la portée de centrage 46 du flasque 22. Cette distance entre l'axe A-A' et les portées de centrage 44, 46 est supérieure à la distance entre l'axe A-A' et la paroi de la cavité 40 du boitier 23, et inférieure à la distance entre l'axe A-A' et la paroi de la cavité 42 du flasque 22.

Avantageusement, le boitier 23 et le flasque 22 présentent plusieurs secteurs en retrait 40, 42 et plusieurs portées de centrage 44, 46, repartis régulièrement autour de l'axe A-A'. Par exemple, le boitier 23 et le flasque 22 présentent le même nombre de secteurs en retrait 40, 42 et de portées de centrage 44, 46, alternativement réparties sur leur circonférence respectives. Chacun des secteurs en retrait 40, 42 et des portées de centrage sont séparés d'un même angle mesuré autour de l'axe A-A'.

Dans l'exemple représenté, le boitier 23 et le flasque 22 présentent chacun trois secteurs en retrait 40, 42, et trois portées de centrage 44, 46, s'étendant chacun sur un secteur angulaire de 60° mesuré par rapport à l'axe A-A', répartis en alternance tous les 60° autour de l'axe A-A'.

Le boitier 23 peut être déplacé entre une configuration de montage, représentée sur les figures 2 et 3, et une configuration de démontage représentée sur la figure 4.

Dans la configuration de montage, les secteurs en retrait 40 du boitier 23 sont disposés en regard des secteurs en retrait 42 du flasque 22, et coopèrent pour former des conduits 48. Les portées de centrage 44 du boitier 23 sont alors disposées en appui contre les portées de centrage 46 du flasque 22. Le centrage de l'axe 16 et la fixation du boitier 23 au carter 20 sont alors assurés par la coopération des portées de centrage 44, 46, permettant au moteur électrique 10 de fonctionner de manière optimale. En effet, la rotation de l'arbre 16 par rapport au carter 20 est alors permise par la rotation de la bague interne 26 du palier de roulement 24 dans la bague externe 28 grâce aux éléments de roulement 30.

Le boitier 23 peut être passé en configuration de démontage par une rotation de 60° autour de l'axe A-A' en partant de la configuration de montage.

Dans la configuration de démontage, les portées de centrage 44 du boitier 23 sont en regard des secteurs en retrait 42 du flasque 22, et les portées de centrage 46 du flasque 22 sont en regard des secteurs en retrait 40 du boitier 23. Le boitier 23 et le flasque 22 présentent alors un jeu entre eux dont la largeur est notée j. Le jeu entre le boitier 23 et le flasque 22 est suffisant pour déplacer axialement le boitier 23 le long de l'arbre 16, jusqu'à l'extrémité libre de l'arbre 16, pour démonter le palier à roulement 24 dans un but d'entretien ou de remplacement.

Le boitier 23 contient, en plus du palier à roulement 24, un déflecteur fixe 50, qui vient en appui axialement contre la bague extérieure 28 du roulement. Le déflecteur fixe 50 est positionné entre le boîtier 23 et une entretoise tournante 52 associée à l'arbre 16 et entourant l'arbre 16.

L'étanchéité du carter 20 est en outre renforcée par un déflecteur interne 54 et un déflecteur externe 56, tous deux enserrés autour de l'arbre 16. Le boitier 23 présente sur une face interne des rainures internes 57 qui s'étendent circonférentiellement autour de l'axe A-A'. Le déflecteur interne 54 présente des nervures parallèles aux rainures 57, qui pénètrent dans les rainures 57 pour former un ensemble de chicanes d'étanchéité internes 58.Le boitier 23 est fermé par un couvercle 60 qui présente des rainures externes 61 qui s'étendent circonférentiellement autour de l'axe A-A'. Le déflecteur externe 56 présente des nervures parallèles aux rainures 61, qui pénètrent dans les rainures 61 pour former un ensemble de chicanes d'étanchéité externe 62 comme représenté figure 2.

Le carter 20 comporte avantageusement une bague de pré-centrage 64, fixée ou intégrée au flasque 22. Cette bague de pré-centrage 64 est configurée pour porter l'arbre 16 en appui sur le déflecteur interne 54, en position de démontage lorsque le boitier de roulement 23 est retiré. Avantageusement, la bague de pré-centrage 64 présente un épaulement 66 permettant de la centrer dans le flasque 22. En variante, la bague 64 peut porter directement l'arbre 16 en position de démontage lorsque le boîtier 23 est retiré.

Selon une variante correspondant notamment au cas où le moteur est un moteur asynchrone, le carter 10 est dépourvu de bague de pré-centrage 64. Le stator 14 présente un alésage configuré pour porter directement l'arbre 16 en position de démontage lorsque le boîtier 23 est retiré. Dans cette variante, le jeu j entre le boitier 23 et le flasque 22 est supérieur à l'entrefer e séparant le stator 14 du rotor 12. Ainsi, en position de démontage, le rotor 12 vient en appui sur l'alésage du stator 14, et le jeu entre le boitier 23 et le flasque 22 est suffisant pour procéder au retrait du boitier 23.

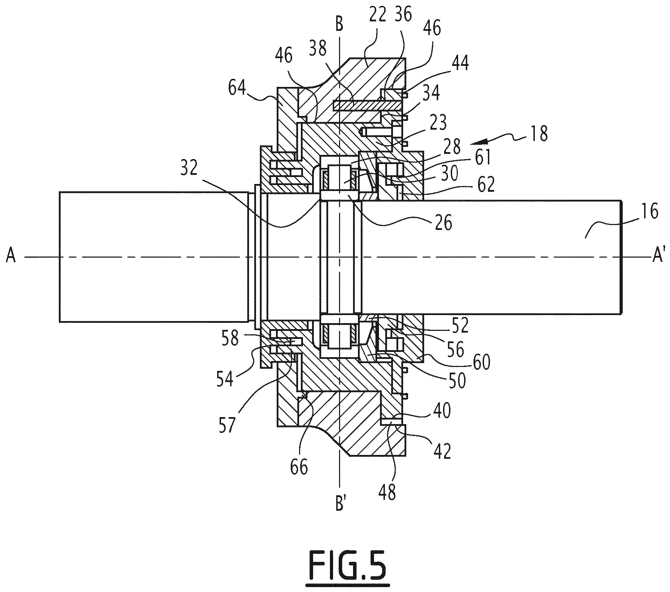

Selon une autre variante représentée sur la figure 5, chaque cavité 40 et chaque portée de centrage 44 est située sur la paroi circonférentielle de l'épaulement 34, et est destinée à coopérer avec le flasque 22 en configuration de montage. De même, chaque cavité 42 et chaque portée de centrage 46 est situé sur la paroi interne du flasque 22 en regard de la paroi circonférentielle de l'épaulement 34. Les conduits 48 se situent donc, en position de montage, au niveau de l'épaulement 34.

Le procédé de démontage du palier de roulement 24 se déroule selon les étapes suivantes :
- démontage et retrait du couvercle 60 et désengagement des rainures externes 61 des nervures du déflecteur externe 56 ;
- démontage et retrait du déflecteur externe 56, de l'entretoise 52 et du déflecteur fixe 50 ;
- retrait des vis de fixation du boitier 23 des filetages 38 du flasque 22 ;- rotation du boitier 23 d'un angle de 60° par rapport au flasque 22, par exemple au moyen d'un outil inséré dans les orifices 36 ;
- retrait du boitier 23 le long de l'arbre 16, et désengagement des rainures internes 57 des nervures du déflecteur interne 54 ; et
- extraction du palier de roulement 24 hors du boitier 23.

Lors du remontage, aucun effort axial ni radial n'est appliqué entre le boîtier 23 et le flasque 22. Ceci permet d'éviter tout risque de dégradation du roulement 24 lors du remontage.

L'invention décrite permet la fourniture d'un moteur électrique dont les roulements sont facilement démontables pour l'entretien ou le remplacement. Le démontage ne nécessite notamment pas de retrait de l'arbre et de dépose du rotor, qui est une étape complexe nécessitant un personnel qualifiés et des moyens de sécurité important. Le moteur selon l'invention permet ainsi de réaliser des économies de personnel et de matériel notables.

Selon une autre variante représentée sur la figure 5, chaque cavité 40 et chaque portée de centrage 44 est située sur la paroi circonférentielle de l'épaulement 34, et est destinée à coopérer avec le flasque 22 en configuration de montage. De même, chaque cavité 42 et chaque portée de centrage 46 est situé sur la paroi interne du flasque 22 en regard de la paroi circonférentielle de l'épaulement 34. Les conduits 48 se situent donc, en position de montage, au niveau de l'épaulement 34.

Le procédé de démontage du palier de roulement 24 se déroule selon les étapes suivantes :
- démontage et retrait du couvercle 60 et désengagement des rainures externes 61 des nervures du déflecteur externe 56 ;
- démontage et retrait du déflecteur externe 56, de l'entretoise 52 et du déflecteur fixe 50 ;
- retrait des vis de fixation du boitier 23 des filetages 38 du flasque 22 ;- rotation du boitier 23 d'un angle de 60° par rapport au flasque 22, par exemple au moyen d'un outil inséré dans les orifices 36 ;
- retrait du boitier 23 le long de l'arbre 16, et désengagement des rainures internes 57 des nervures du déflecteur interne 54 ; et
- extraction du palier de roulement 24 hors du boitier 23.

Lors du remontage, aucun effort axial ni radial n'est appliqué entre le boîtier 23 et le flasque 22. Ceci permet d'éviter tout risque de dégradation du roulement 24 lors du remontage.

L'invention décrite permet la fourniture d'un moteur électrique dont les roulements sont facilement démontables pour l'entretien ou le remplacement. Le démontage ne nécessite notamment pas de retrait de l'arbre et de dépose du rotor, qui est une étape complexe nécessitant un personnel qualifiés et des moyens de sécurité important. Le moteur selon l'invention permet ainsi de réaliser des économies de personnel et de matériel notables.

## Revendications

1. Moteur électrique (10) comprenant :
- un carter de moteur (20), sur lequel est assemblé au moins un flasque d'extrémité (22) ;
- un arbre (16) mobile en rotation autour d'un axe (A-A') par rapport au carter (20) ;
- un dispositif de roulement (18) fixé au carter (20), comprenant un boitier (23) contenant un palier à roulement (24) positionné autour de l'arbre (16) de façon à permettre la rotation de l'arbre (16) autour de l'axe (A-A') par rapport au carter (20), le dispositif de roulement (18) fermant le flasque (22) ;
**caractérisé en ce que** le boitier (23) présente une pluralité de cavités (40) sur une partie d'une surface de contact circonférentielle avec le flasque (22) et une pluralité de portées de centrage (44) sur le reste de la surface de contact circonférentielle avec le flasque (22), les cavités (40) et les portées de centrage (44) du boitier (23) étant régulièrement réparties autour de l'axe (A-A'),
le flasque (22) présentant une pluralité de cavités (42) sur une partie de la surface de contact circonférentielle avec le boitier (23) et une pluralité de portées de centrage (46) sur le reste de la surface de contact circonférentielle avec le boitier (23), les cavités (42) et les portées de centrage (46) du flasque (22) étant régulièrement réparties autour de l'axe (A-A'),
le dispositif de roulement (18) étant déplaçable entre une position de montage, dans laquelle chaque portée de centrage (44) du boitier (23) est en appui contre une des portées de centrage (46) du flasque (22) de sorte que le dispositif de roulement (18) est fixé au carter (20) en position de montage, et une position de démontage, dans laquelle chaque portée de centrage (44) du boitier (23) est disposée en regard d'une des cavités (42) du flasque (22) et chaque portée de centrage (46) du flasque (22) est disposée en regard d'une des cavités (40) du boitier (23), de sorte que le dispositif de roulement (18) est mobile en translation selon l'axe (A-A') par rapport au carter (20) et à l'arbre (16), en position de démontage,
dans lequel le déplacement du dispositif de roulement (18) entre sa position de montage et sa position de démontage se fait par rotation du dispositif de roulement (18) autour de l'axe (A-A').

2. Moteur électrique (10) selon la revendication 1, dans lequel, en position de montage, la cavité (42) du flasque (22) est disposée en regard de la cavité (40) du boitier (23), lesdites cavités (42, 40) du flasque (22) et du boitier (23) définissant entre elles au moins un conduit (48).

3. Moteur électrique (10) selon la revendication 1 ou 2, dans lequel le carter (20) comprend une bague de pré-centrage (64), ladite bague (64) étant configurée pour porter l'arbre (16) en position de démontage lorsque le dispositif de roulement (18) est retiré.

4. Moteur électrique (10) selon la revendication 3, dans lequel, en position de démontage, l'arbre (16) est en appui contre la bague de pré-centrage (64) par l'intermédiaire du déflecteur interne (54).

5. Moteur électrique (10) selon l'une des revendications 1 à 4, dans lequel le moteur (10) comprend un stator (14) et un rotor (12) séparés par un entrefer (e), et dans lequel le stator (14) comprend un alésage configuré pour porter l'arbre (16) en position de démontage lorsque le dispositif de roulement (18) est retiré.

6. Moteur électrique (10) selon les revendications 2 et 5, présentant un jeu (j) entre le boitier (23) et le flasque (22) en position de démontage, le jeu (j) étant supérieur à l'entrefer (e).

7. Moteur électrique (10) selon l'une quelconque des revendications précédentes, dans lequel le dispositif de roulement (18) comporte un couvercle (60) présentant des rainures externes (61) qui coopèrent avec un déflecteur externe (56) monté sur l'arbre (16) pour former un ensemble de chicanes d'étanchéité externe (62).

8. Moteur électrique (10) selon l'une quelconque des revendications précédentes, dans lequel le dispositif de roulement (18) comporte des rainures internes (57) coopérant avec un déflecteur interne (54) monté sur l'arbre (16) pour former un ensemble de chicanes d'étanchéité interne (58).

9. Moteur électrique (10) selon l'une des revendications précédentes, dans lequel le boitier (23) présente plusieurs cavités (40) et un même nombre de portées de centrage (44) et le flasque (22) présente le même nombre de cavités (42) et de portées de centrage (46).

## Patentansprüche

1. Elektromotor (10), aufweisend:
- ein Motorgehäuse (20), an welchem wenigstens ein Endflansch (22) angebracht ist,
- eine Welle (16), die relativ zu dem Gehäuse (20) um eine Achse (A-A') rotationsbewegbar ist,
- eine Lagereinrichtung (18), die am Gehäuse (20) befestigt ist und aufweist ein Aufnahmegehäuse (23), das ein Drehlager (24) enthält, das um die Welle (16) herum positioniert ist, um die Rotation der Welle (16) um die Achse (A-A') relativ zu dem Gehäuse (20) zu ermöglichen, wobei die Lagereinrichtung (18) den Flansch (22) verschließt,
**dadurch gekennzeichnet, dass** das Aufnahmegehäuse (23) eine Mehrzahl von Kavitäten (40) an einem Teil einer umfänglichen Kontaktfläche mit dem Flansch (22) und eine Mehrzahl von Zentriersitzen (44) an dem Restlichen der umfänglichen Kontaktfläche mit dem Flansch (22) hat, wobei die Kavitäten (40) und die Zentriersitze (44) des Aufnahmegehäuses (23) um die Achse (A-A') herum regelmäßig verteilt sind,
wobei der Flansch (22) eine Mehrzahl von Kavitäten (42) an einem Teil der umfänglichen Kontaktfläche mit dem Aufnahmegehäuse (23) und eine Mehrzahl von Zentriersitzen (46) an dem Restlichen der umfänglichen Kontaktfläche mit dem Aufnahmegehäuse (23) hat, wobei die Kavitäten (42) und die Zentriersitze (46) des Flanschs (22) regelmäßig um die Achse (A-A') herum verteilt sind,
wobei die Lagereinrichtung (18) verlagerbar ist zwischen einer Montageposition, in welcher jeder Zentriersitz (44) des Aufnahmegehäuses (23) gegen einen der Zentriersitze (46) des Flanschs (22) angelegt ist, sodass die Lagereinrichtung (18) an dem Gehäuse (20) in Montageposition befestigt ist, und einer Demontageposition, in welcher jeder Zentriersitz (44) des Aufnahmegehäuses (23) gegenüber einer der Kavitäten (42) des Flanschs (22) angeordnet ist und jeder Zentriersitz (46) des Flanschs (22) gegenüber einer der Kavitäten (40) des Aufnahmegehäuses (23) angeordnet ist, sodass die Lagereinrichtung (18) in der Demontageposition translationsbewegbar ist entlang der Achse (A-A') relativ zu dem Gehäuse (20) und der Welle (16),
wobei die Verlagerung der Lagereinrichtung (18) zwischen ihrer Montageposition und ihrer Demontageposition durch Rotation der Lagereinrichtung (18) um die Achse (A-A') bewirkt wird.

2. Elektromotor (10) gemäß Anspruch 1, wobei in der Montageposition die Kavität (42) des Flanschs (22) gegenüber der Kavität (40) des Aufnahmegehäuses (23) angeordnet ist, wobei die Kavitäten (42, 40) des Flanschs (22) und des Aufnahmegehäuses (23) zwischen sich wenigstens einen Kanal (48) definieren.

3. Elektromotor (10) gemäß Anspruch 1 oder 2, wobei das Gehäuse (20) einen Vorzentrier-Ring (64) aufweist, wobei der Ring (64) konfiguriert ist zum Tragen der Welle (16) in der Demontageposition, wenn die Lagereinrichtung (18) zurückgezogen ist.

4. Elektromotor (10) gemäß Anspruch 3, wobei in der Demontageposition die Welle (16) über den inneren Leitring (54) gegen den Vorzentrier-Ring (64) angelegt ist.

5. Elektromotor (10) gemäß einem der Ansprüche 1 bis 4, wobei der Motor (10) aufweist einen Stator (14) und einen Rotor (12), die getrennt sind durch einen Spalt (e), und wobei der Stator (14) eine Bohrung aufweist, die konfiguriert ist zum Tragen der Welle (16) in der Demontageposition, wenn die Lagereinrichtung (18) zurückgezogen ist.

6. Elektromotor (10) gemäß den Ansprüche 2 und 5, welcher ein Spiel (j) hat zwischen dem Aufnahmegehäuse (23) und dem Flansch (22) in der Demontageposition, wobei das Spiel (j) größer als der Spalt (e) ist.

7. Elektromotor (10) gemäß irgendeinem der vorhergehenden Ansprüche, wobei die Lagereinrichtung (18) einen Deckel (60) aufweist, der äußere Nuten (61) hat, die mit einem äußeren Leitring (56) zusammenwirken, der auf der Welle (16) montiert ist, zum Bilden einer äußeren Labyrinth-Dichtungs-Einrichtung (62) .

8. Elektromotor (10) gemäß irgendeinem der vorhergehenden Ansprüche, wobei die Lagereinrichtung (18) innere Nuten (57) aufweist, die mit einem inneren Leitring (54) zusammenwirken, der auf die Welle (16) montiert ist, zum Bilden einer inneren Labyrinth-Dichtungs-Einrichtung (58).

9. Elektromotor (10) gemäß irgendeinem der vorhergehenden Ansprüche, wobei das Aufnahmegehäuse (23) mehrere Kavitäten (40) und eine gleiche Anzahl an Zentriersitzen (44) hat, und wobei der Flansch (22) die gleiche Anzahl an Kavitäten (42) und an Zentriersitzen (46) hat.

## Claims

1. Electric motor (10), comprising:
- a motor housing (20) on which there is assembled at least one end shield (22);
- a shaft (16) which is rotatable about an axis (A-A') relative to the housing (20);
- a bearing device (18) fixed to the housing (20), comprising a casing (23) containing a roller bearing (24) positioned around the shaft (16) so as to allow the shaft (16) to rotate about the axis (A-A') relative to the housing (20), the bearing device (18) closing the shield (22);
**characterised in that** the casing (23) has a plurality of cavities (40) on a portion of a surface that is in circumferential contact with the shield (22) and a plurality of centring seats (44) on the remainder of the surface that is in circumferential contact with the shield (22), the cavities (40) and the centring seats (44) of the casing (23) being evenly distributed around the axis (A-A'),
the shield (22) having a plurality of cavities (42) on a portion of the surface that is in circumferential contact with the casing (23) and a plurality of centring seats (46) on the remainder of the surface that is in circumferential contact with the casing (23), the cavities (42) and the centring seats (46) of the shield (22) being evenly distributed around the axis (A-A'),
the bearing device (18) being displaceable between a mounting position, in which each centring seat (44) of the casing (23) is in abutment against one of the centring seats (46) of the shield (22) so that the bearing device (18) is fixed to the housing (20) in the mounting position, and a demounting position, in which each centring seat (44) of the casing (23) is arranged opposite one of the cavities (42) of the shield (22) and each centring seat (46) of the shield (22) is arranged opposite one of the cavities (40) of the casing (23), so that the bearing device (18) is movable in translation along the axis (A-A') relative to the housing (20) and to the shaft (16), in the demounting position,
wherein the displacement of the bearing device (18) between its mounting position and its demounting position is effected by rotating the bearing device (18) about the axis (A-A').

2. Electric motor (10) according to claim 1, wherein, in the mounting position, the cavity (42) of the shield (22) is arranged opposite the cavity (40) of the casing (23), said cavities (42, 40) of the shield (22) and of the casing (23) defining between them at least one conduit (48).

3. Electric motor (10) according to claim 1 or 2, wherein the housing (20) comprises a pre-centring ring (64), said ring (64) being configured to carry the shaft (16) in the demounting position when the bearing device (18) is removed.

4. Electric motor (10) according to claim 3, wherein, in the demounting position, the shaft (16) is in abutment against the pre-centring ring (64) by way of the internal deflector (54).

5. Electric motor (10) according to any one of claims 1 to 4, wherein the motor (10) comprises a stator (14) and a rotor (12) separated by an air gap (e), and wherein the stator (14) comprises a bore configured to carry the shaft (16) in the demounting position when the bearing device (16) is removed.

6. Electric motor (10) according to claims 2 and 5, having a clearance (j) between the casing (23) and the shield (22) in the demounting position, the clearance (j) being greater than the air gap (e).

7. Electric motor (10) according to any one of the preceding claims, wherein the bearing device (18) comprises a cover (60) having external grooves (61) which cooperate with an external deflector (56) mounted on the shaft (16) to form an external set of sealing baffles (62).

8. Electric motor (10) according to any one of the preceding claims, wherein the bearing device (18) comprises internal grooves (57) cooperating with an internal deflector (54) mounted on the shaft (16) to form an internal set of sealing baffles (58).

9. Electric motor (10) according to any one of the preceding claims, wherein the casing (23) has multiple cavities (40) and the same number of centring seats (44), and the shield (22) has the same number of cavities (42) and centring seats (46).
